# EUROPEAN PATENT SPECIFICATION

(11) **EP 3 225 519 B1**
(45) Date of publication and mention of the grant of the patent: **06.11.2024**
(21) Application number: 17164431.3
(22) Date of filing: 31.03.2017
(51) Int. Cl.: B62J 1/08

(54) **ELECTRICALLY CONTROLLABLE SEAT POST**
ELEKTRISCH STEUERBARE SATTELSTÜTZE
MONTANT DE SIÈGE RÉGLABLE ÉLECTRIQUEMENT

(30) Priority: 01.04.2016 TW 105204620 U
(43) Date of publication of application: 04.10.2017
(73) Proprietor: Giant Manufacturing Co., Ltd., Taichung City 437 (TW)
(72) Inventor: JHOU, Shu-Yu, 108 Taipei City (TW); HSU, Che-Wei, New Taipei City (TW); CHEN, I-Teh, Taichung City (TW)
(74) Representative: Lang, Christian

(56) References cited:
- EP-A1- 2 865 586
- CN-U- 204 587 107
- US-B2- 8 308 124

## Description

### BACKGROUND

### Technical Field

The present disclosure relates to a retractable seat post. More particularly, the present disclosure relates to an electrically controllable and retractable seat post that has higher retracting speed and stroke.

### Description of Related Art

Owing to the increasing demands of the bike riders, a seat post that with a height-adjustable rod (saddle) has been reached in the market. Conventionally, the height of this kind of retractable seat post can be manually controlled to adapt to variant road conditions. For example, the saddle can be lowered by adjusting the height of the retractable seat post while riding downhill. Therefore, the center of gravity can be lowered so that the handling can be enhanced and the foot can touch the ground to assist to turn around the corner. This kind of retractable seat post is suitable for mountain biking or hillwood road biking owing to its capability of overcoming uncertainties of a rough road.

A kind of retractable seat post is wire-controlled. An exposed wire is connected to the handle bar and the retractable seat post under the saddle, and a lever or other linkage mechanism is used to open a hydraulic or a pneumatic valve thereby elongating or contracting the retractable seat post. However, no matter the wire is exposed out or not, interference or friction of the wire will commonly occur.

Another kind of retractable seat post with electricity controllability has been developed. In this kind of seat post, a motor is used to activate a hydraulic valve or a pneumatic valve. In this kind of seat post, issues on wire interference or friction can be eliminated; however, other issues are raised. For example, a sufficient torque is required to open the hydraulic valve or the pneumatic valve, and since a rotation speed is inversely proportional to a torque in a motor, the response time of the motor to produce sufficient torque is too low to reflect the road condition immediately. Furthermore, an extra device (e.g. a gear box) is also required to be assembled with the motor, thus bringing the inconvenience on assembling. In other word, this kind of motor-driven seat post can eliminate wire interference or friction issue of the wire-controlled seat post, but will raise new issues on low response speed and inconvenience of assembling.

Therefore, there is a need to develop a novel seat post that has low response time and is easy to assemble.

From patent application publication EP 2865586 A1, which discloses all the features of the preamble of independent claim 1, and utility model publication CN 204587107 U height adjustable seat posts are known comprising an electric motor by means of which a switch can be actuated. Patent specification US 8308124 B2 discloses a seat post allowing for a height adjustment of a saddle by means of a wire mechanism by which a switch can be actuated.

### SUMMARY

The present invention provides an electrically controllable seat post having the features of claim 1. Further embodiments are subject-matter of the dependent claims. The electrically controllable seat post includes a retractable rod and a switch actuator. The retractable rod includes a switch and a cylinder, wherein the switch is configured to trigger an elongation and a contraction of the cylinder. The switch actuator is corresponding to the switch and includes a pushing member, an electromagnetic coil and a controller. The pushing member is linearly movable to open or close the switch so as to drive an elongation and a contraction of the retractable rod via elongation and contraction of the cylinder. The electromagnetic coil generates a magnetic force by injecting a current therethrough, wherein the pushing member has a pole of a magnetic field formed at an end of the pushing member by injecting the current through the electromagnetic coil or by a magnetic property at the end of the pushing member. The pushing member is directly and non-contactly driven by another pole of a magnetic field formed by the electromagnetic coil to be moved linearly. The controller controls the switch actuator. The electromagnetic coil includes an inner surface, the inner surface includes a spiral groove, the pushing member includes a protruding member corresponding to the spiral groove, and when the pushing member is elongated or contracted, the protruding member slides in the spiral groove to rotate the pushing member synchronously, so that the pushing member is linearly movable and rotatable to open or close the switch.

In one example, the cylinder is a pneumatic cylinder, a hydraulic cylinder or a liquid-gas modularized cylinder, and the switch is located on the cylinder.

In one example, the retractable rod is a pneumatic rod, a hydraulic rod or a liquid-gas modularized rod.

In one example, the switch is a valve and the pushing member is moved to open or close the valve.

In one example, the switch is a button and the pushing member is moved to push the button.

In one example, the retractable rod includes a rod axis, and a moving direction of the pushing member is perpendicular to the rod axis.

In one example, the switch actuator is immediately adjacent to the retractable rod.

In one example, the electromagnetic coil is located in the retractable rod.

In one example, the electromagnetic coil is located at an end of the retractable rod.

In one example, the electrically controllable seat post includes a recovering member, wherein the recovering member is located between the electromagnetic coil and the pushing member for providing a recovering force.

In one example, the pushing member includes at least one protruded limiting lever, an angle limitation mechanism is assembled outside of the limiting lever, the angle limitation mechanism opens at least one curved opening, the limiting lever is position-limitedly swung in the curved opening, and a rotation angle of the pushing member is constrained by the corporation between the limiting lever and the curved opening.

### BRIEF DESCRIPTION OF THE DRAWINGS

The present disclosure can be more fully understood by reading the following detailed description of the embodiment, with reference made to the accompanying drawings as follows:
Fig. 1 is a cross-sectional view of an electrically controllable seat post according to a first embodiment of the present disclosure;
Fig. 2 is a lateral cross-sectional view of a saddle of the electrically controllable seat post of Fig. 1;
Fig. 3 is a longitudinal cross-sectional view of the saddle of the electrically controllable seat post of Fig. 2;

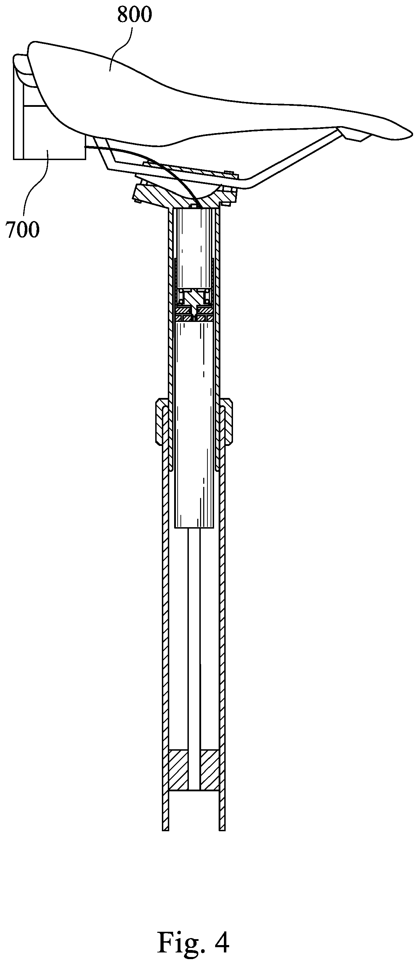

Fig. 4 is a cross-sectional view of a saddle of an electrically controllable seat post according to a second embodiment of the present disclosure;
Fig. 5 is a cross-sectional view of a saddle of an electrically controllable seat post according to a third embodiment of the present disclosure;
Fig. 6 is a cross-sectional view of a saddle of an electrically controllable seat post according to a fourth embodiment of the present disclosure;
Fig. 7 is a cross-sectional view of a saddle of an electrically controllable seat post according to a fifth embodiment of the present disclosure;
Fig. 8 is a cross-sectional view of a saddle of an electrically controllable seat post according to a sixth embodiment of the present disclosure;
Fig. 9 is a cross-sectional view of a saddle of an electrically controllable seat post according to a seventh embodiment of the present disclosure;
Fig. 10 is a cross-sectional view of a saddle of an electrically controllable seat post according to an eighth embodiment of the present disclosure;
Figs. 11 is a longitudinal cross-sectional view of the saddle of the electrically controllable seat post of Fig. 10;
Fig. 12 is a cross-sectional view of a saddle of an electrically controllable seat post according to a ninth embodiment of the present disclosure;
Fig. 13 is a cross-sectional view of an electrically controllable seat post according to a tenth embodiment of the present disclosure;
Fig. 14 is a schematic view showing that a pushing member is rotated to open a switch according to an eleventh embodiment of the present disclosure;
Fig. 15 is a schematic view shows that the pushing member is rotated to open the switch of Fig. 14;
Fig. 16 shows an operation procedure of an electromagnetic coil and two pushing members;
Fig. 17 shows another operation procedure of the electromagnetic coil and the two pushing members of Fig. 16; and
Fig. 18 a schematic view of an angle limitation mechanism of a pushing member according to a twelfth embodiment of the present disclosure.

### DETAILED DESCRIPTION

It is a purpose of the present disclosure to provide an electrically controllable and retractable seat post that has no motor response delay and ease of assembling.

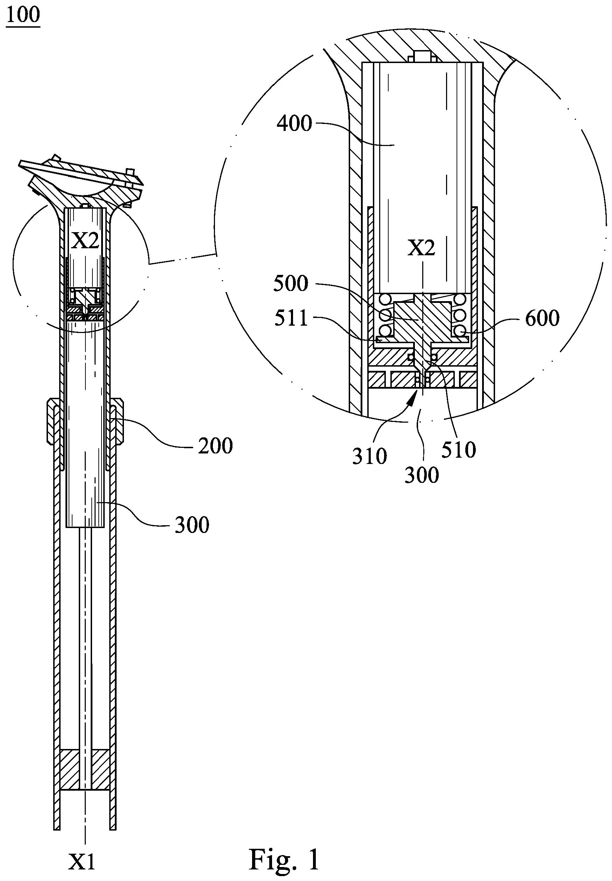

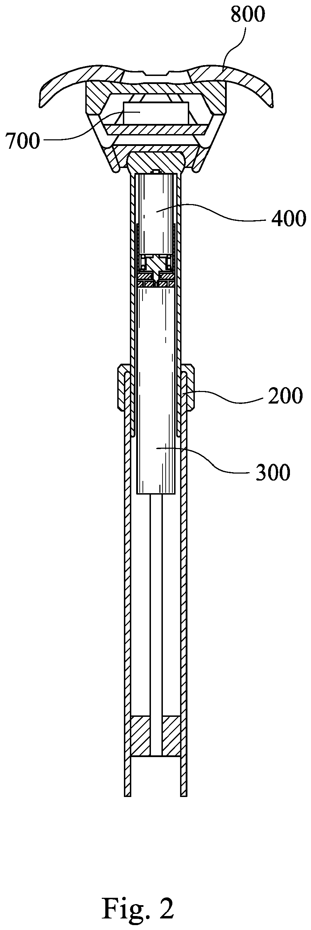

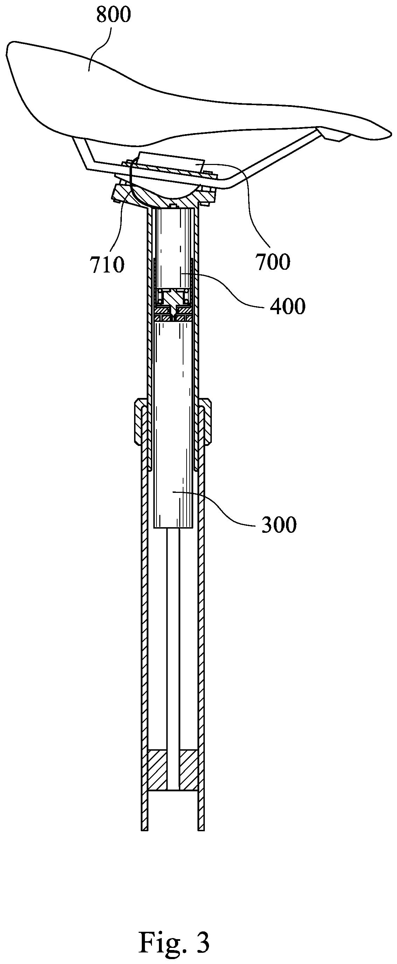

Fig. 1 is a cross-sectional view of an electrically controllable seat post according to a first embodiment of the present disclosure; Fig. 2 is a lateral cross-sectional view of a saddle of the electrically controllable seat post of Fig. 1; Fig. 3 is a longitudinal cross-sectional view of the saddle of the electrically controllable seat post of Fig. 2.

In the first embodiment, an electrically controllable seat post 100 includes a retractable rod 200, a cylinder 300, an electromagnetic coil 400, a pushing member 500, a recovering member 600 and a controller 700. The electromagnetic coil 400 and the pushing member 500 are operated corporately as a switch actuator (unnumbered).

The cylinder 300 is fixedly covered in the retractable rod 200. The cylinder 300 includes a switch 310 and a rod axis X1. A saddle 800 is assembled on the retractable rod 200. The switch 310 is used to trigger the elongation and contraction of the cylinder 300, and the elongation and contraction of the cylinder 300 drives the elongation and contraction of the retractable rod 200, thereby raising or lowering the saddle 800 instantly. The cylinder 300 can be a pneumatic cylinder, a hydraulic cylinder or a liquid-gas modularized cylinder; similarly, the retractable rod 200 can be a pneumatic rod, a hydraulic rod or a liquid-gas modularized rod. In the embodiment, the cylinder 300 is located inside of the retractable rod 200.

The electromagnetic coil 400 is assembled in the retractable rod 200 and is corresponding to the switch 310. A portion of the pushing member 500 is assembled in the electromagnetic coil 400. A central axis X2 of the pushing member 500 is parallel to the rod axis X1 of the cylinder 300. One end 510 of the pushing member 500 is linearly moved by the electromagnetic coil 400 to open or close the switch 310.

The recovering member 600 is made from an elastic material. The recovering member 600 provides a recovering force to the end 510 of the pushing member 500 so that the pushing member 500 is recovered to its original position.

The controller 700 is assembled under the saddle 800. The controller 700 controls the electromagnetic coil 400 through a connecting wire 710.

In the aforementioned first embodiment, the central axis X2 of the pushing member 500 is parallel to the rod axis X1; therefore the switch 310 is triggered by the pushing member 500, which is linear activated by the electromagnetic coil 400. The controller 700 can control the electromagnetic coil 400 to trigger the switch 310 instantly. The recovering member 600 is used to provide the recovering force to the end 510 of the pushing member 500 to recover the pushing member 500 to its original position.

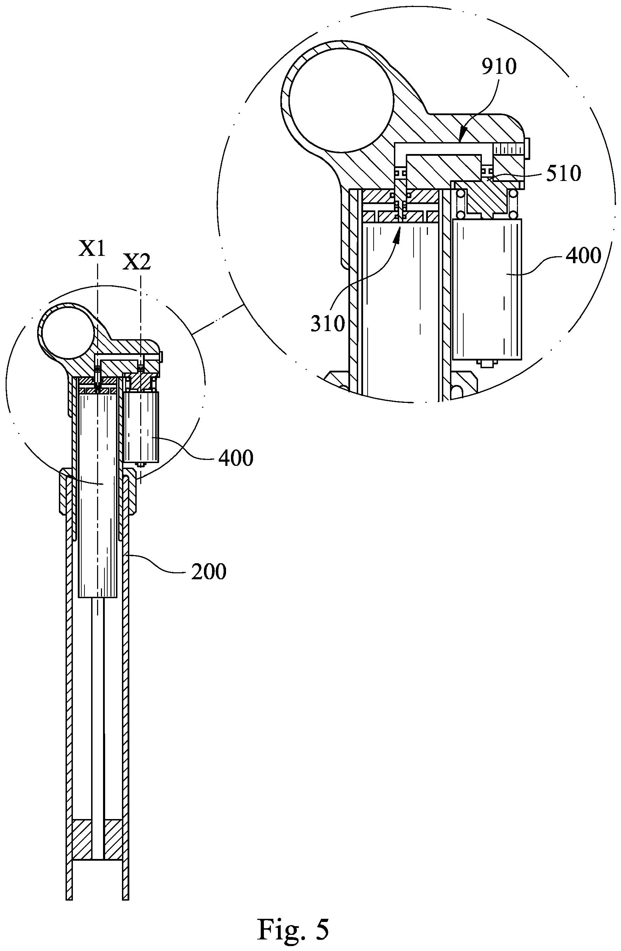

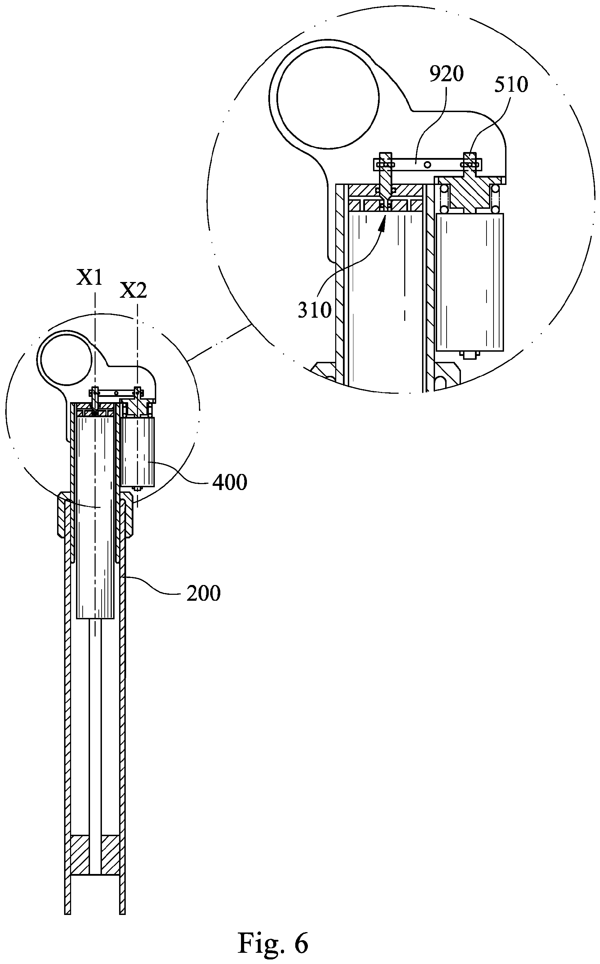

Fig. 5 is a cross-sectional view of a saddle of an electrically controllable seat post according to a third embodiment of the present disclosure; Fig. 6 is a cross-sectional view of a saddle of an electrically controllable seat post according to a fourth embodiment of the present disclosure.

In the third embodiment and the fourth embodiment, the end 510 is indirectly driven to trigger the switch 310, and the electromagnetic coil 400 is located outside of the retractable rod 200 and is assembled immediately adjacent to the retractable rod 200 to ensure that the central axis X2 is parallel to the rod axis X1.

In Fig. 5, an inverted-U shaped hydraulic linkage mechanism 910 is located between the end 510 and the switch 310 for triggering the switch 310. Conventionally, the hydraulic linkage mechanism 910 includes components such as oil route, piston and oil injection channel, etc., and there is no description herein.

In Fig. 6, a swing linkage mechanism 920 is located between the end 510 and the switch 310 for triggering the switch 310. Conventionally, the swing linkage mechanism 920 includes components such as a swing lever and a triggering lever, etc., and there is on description herein.

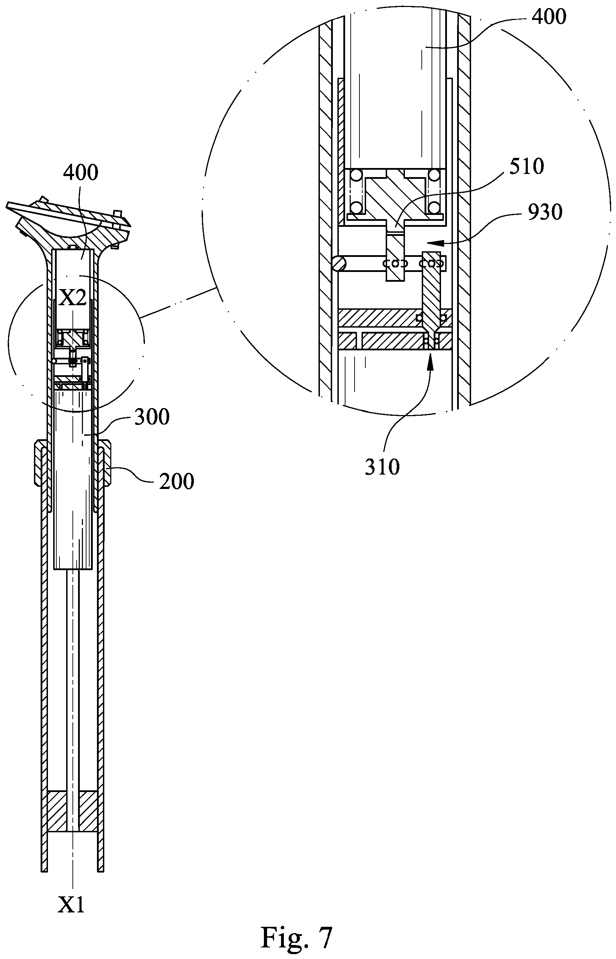

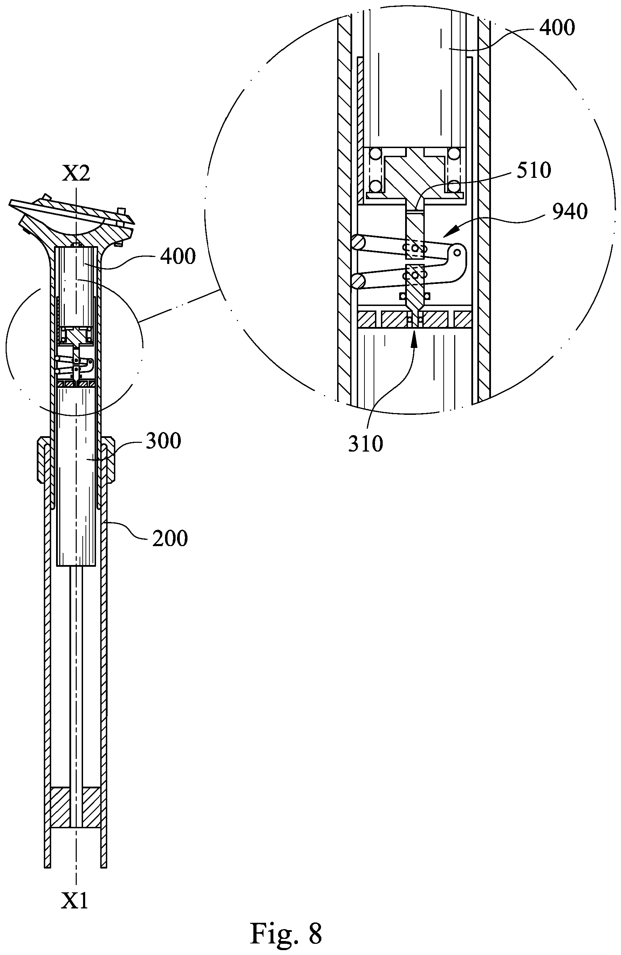

Fig. 7 is a cross-sectional view of a saddle of an electrically controllable seat post according to a fifth embodiment of the present disclosure; Fig. 8 is a cross-sectional view of a saddle of an electrically controllable seat post according to a sixth embodiment of the present disclosure.

In the fifth embodiment and the sixth embodiment, the central axis X2 and the rod axis X1 are coaxial, the end 510 is indirectly driven to trigger the switch 310, and the electromagnetic coil 400 is located inside of the retractable rod 200. The electromagnetic coil 400 is assembled at an upper end of the retractable rod 200 coaxially (upper end of the cylinder 300).

In Fig. 7, an L-shaped linkage mechanism 930 is used to trigger the switch 310. Conventionally, the linkage mechanism 930 includes components such as an L-shaped lever and a vertical triggering lever, etc., and there is on description herein. In Fig. 7, the end 510 and the switch 310 are not necessarily located in the same axis owing to the L-shaped linkage mechanism 930.

In Fig. 8, a close-type linkage mechanism 940 is located between the end 510 and the switch 310 for triggering the switch 310. Conventionally, the linkage mechanism 940 includes components such as double-inclined lever and a triggering lever, etc., and there is on description herein.

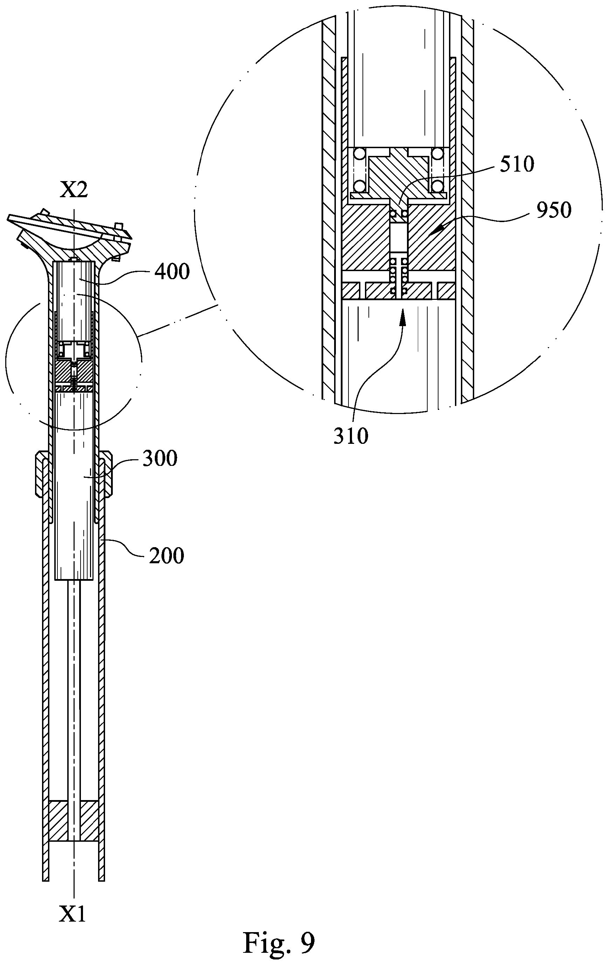

Fig. 9 is a cross-sectional view of a saddle of an electrically controllable seat post according to a seventh embodiment of the present disclosure.

In the seventh embodiment, the central axis X2 and the rod axis X1 are coaxial, the end 510 is indirectly driven to trigger the switch 310, and the electromagnetic coil 400 is located inside of the retractable rod 200. The electromagnetic coil 400 is assembled at an upper end of the cylinder 300. A vertical-type hydraulic linkage mechanism 950 is located between the end 510 and the switch 310 to trigger the switch 310. Conventionally, the vertical-type hydraulic linkage mechanism 950 includes components such as a vertical oil route and a piston, etc., and there is on description herein.

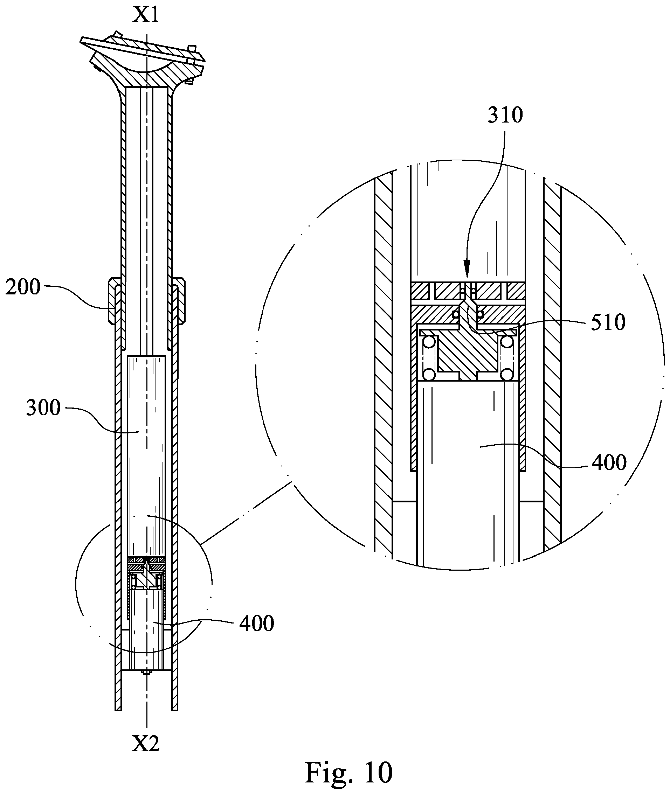

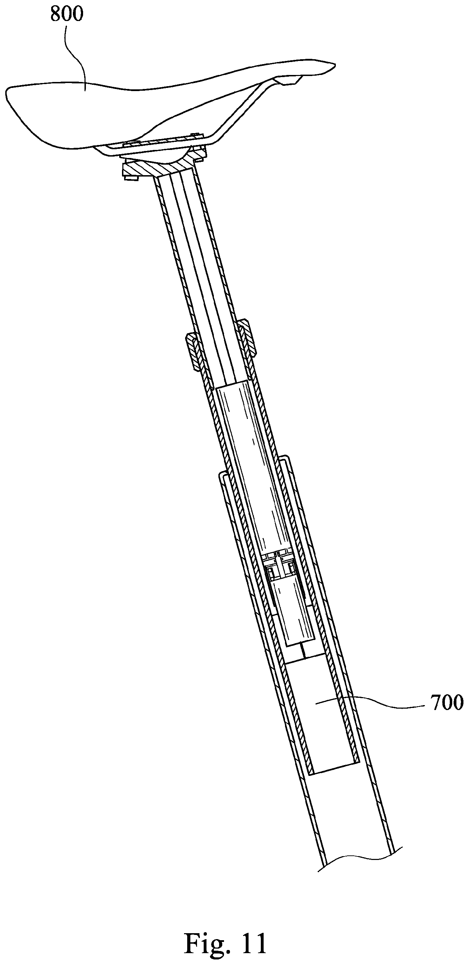

Fig. 10 is a cross-sectional view of a saddle of an electrically controllable seat post according to an eighth embodiment of the present disclosure; Fig. 11 is a longitudinal cross-sectional view of the saddle of the electrically controllable seat post of Fig. 10.

In the eighth embodiment, the central axis X2 and the rod axis X1 are coaxial, the end 510 is indirectly driven to trigger the switch 310, and the electromagnetic coil 400 is located inside of the retractable rod 200. The electromagnetic coil 400 is assembled at a bottom end of the cylinder 300. The controller 700 (and/or an electric controlling unit such as a battery and a chip, etc.) assembled in the retractable rod 200 can also be used to reduce the amount of components located under the saddle 800.

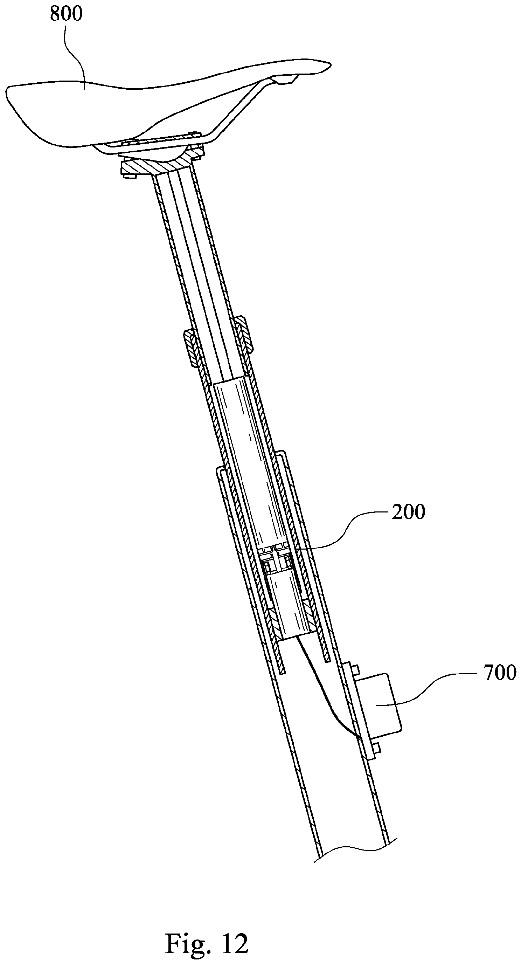

Fig. 12 is a cross-sectional view of a saddle of an electrically controllable seat post according to a ninth embodiment of the present disclosure.

In Fig. 12, the controller 700 (and/or an electric controlling unit such as a battery and a chip, etc.) is assembled outside of the retractable rod 200.

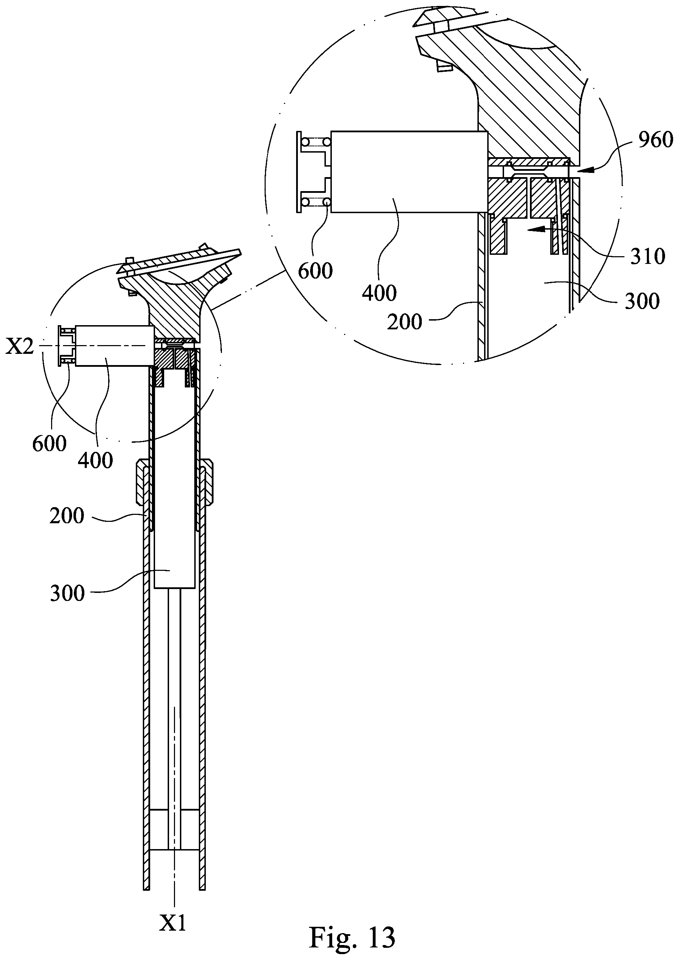

Fig. 13 is a cross-sectional view of an electrically controllable seat post according to a tenth embodiment of the present disclosure.

In Fig. 13, the electrically controllable seat post also includes the retractable rod 200, the electromagnetic coil 400 and the cylinder 300. In the tenth embodiment of Fig. 13, the central axis X2 and the rod axis X1 are vertically arranged, and an L-shaped hydraulic linkage mechanism 960 is corporate with the switch 310 to raise or lower the saddle. Conventionally, the linkage mechanism 960 includes components such as double oil routes and piston, etc., and there is no description herein. Furthermore, the recovering member 600 is located outside of the electromagnetic coil 400 to provide a recovering force.

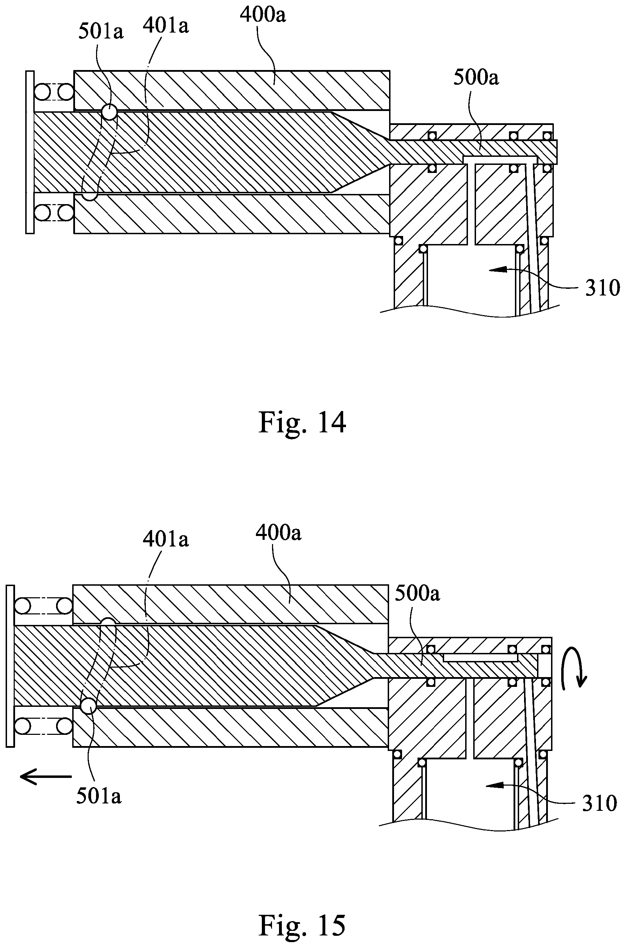

Fig. 14 is a schematic view showing that a pushing member is rotated to open a switch 310 according to an eleventh embodiment of the present disclosure; Fig. 15 is a schematic view showing that the pushing member is rotated to open the switch 310 of Fig. 14.

In the present disclosure, the pushing member 500 can be linearly moved as in the aforementioned embodiments; or a pushing member 500a can be rotated as in the eleventh embodiment of Fig. 14. The rotation of the pushing member 500a is formed by the corporation of a spiral groove 401a formed in an inner surface of the electromagnetic coil 400a with a protruding member 501a (a steel ball). When an elongation and contraction of the pushing member 500a is actuated by the electromagnetic coil 400a, the protruding member 501a slides in the spiral groove 401a to rotate the pushing member 500a. This kind of mechanism is to transfer a linear motion to a rotation motion and is a conventional technique.

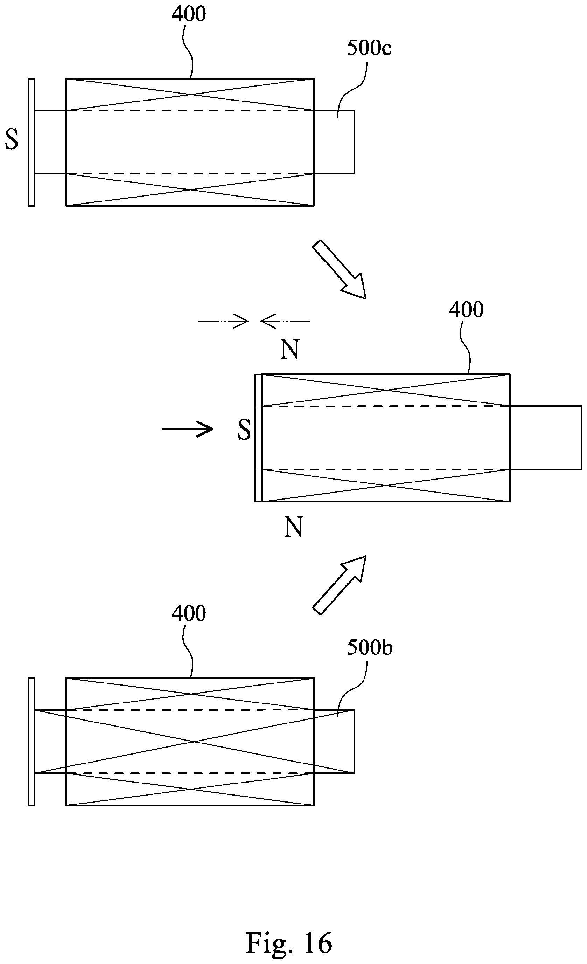

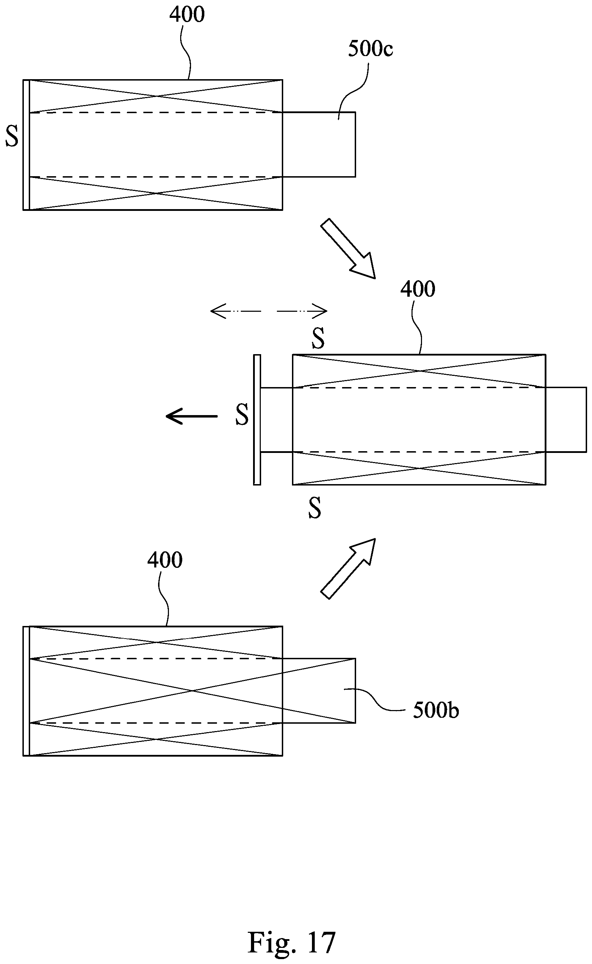

Fig. 16 shows an operation procedure of an electromagnetic coil and two pushing members; Fig. 17 shows another operation procedure of the electromagnetic coil and the two pushing members of Fig. 16.

In one embodiment, the pushing member can have a magnetic property. In Fig. 16, a pushing member 500c having a magnetic property at its end (functioned as an S pole in a magnetic field) and a pushing member 500b having no magnetic property are shown. The electromagnetic coil 400 and the pushing member 500b both have no magnetic field before injecting a current. When the current is injected to the electromagnetic coil 400, a corresponding N pole in a magnetic field is formed, and the pushing member 500b or the pushing member 500c is linearly moved owing to the repulsion of the magnetic field.

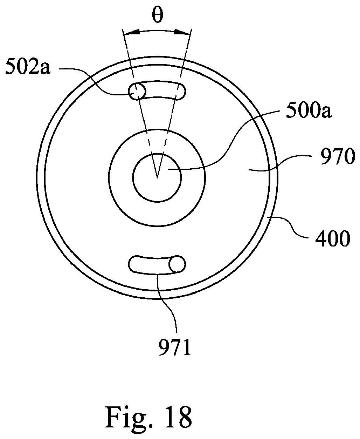

Fig. 18 a schematic view of an angle limitation mechanism of a pushing member according to a twelfth embodiment of the present disclosure.

In the twelfth embodiment of Fig. 18, an angle limitation mechanism 970 is assembled in the pushing member 500a. The pushing member 500a further includes two L-shaped limiting levers 502a. The two limiting levers 502a are assembled diagonally, and a front end of each of the limiting levers 502a is protruded. The angle limitation mechanism 970 can be assembled at one end of the electromagnetic coil 400. The angle limitation mechanism 970 opens two curved openings 971, the front end of each of the limiting levers 502a is position-limitedly swung in the curved openings 971, and a rotation angle *θ* of the pushing member 500a is constrained, thereby precisely controlling a movement of the pushing member 500a within the range of the rotation angle *θ*.

In sum, the present disclosure provides an electrically controllable seat post that using the switch actuator to activate a elongation and contraction of the retractable rod, and has advantages on wireless and precision control, rapid operation and minimizing cable routing.

## Claims

1. An electrically controllable seat post (100), comprising:
a retractable rod (200) comprising a switch (310) and a cylinder (300), wherein the switch (310) is configured to trigger an elongation and a contraction of the cylinder (300); and
a switch actuator corresponding to the switch (310) and comprising:
a pushing member (500), which is linearly movable to open or close the switch (310) so as to drive an elongation and a contraction of the retractable rod (200) via elongation and contraction of the cylinder (300); and
an electromagnetic coil (400) generating a magnetic force by injecting a current therethrough; and
a controller (700) controlling the switch actuator;
wherein the pushing member (500) has a pole of a magnetic field formed at an end of the pushing member (500) by injecting the current through the electromagnetic coil (400) or by a magnetic property at the end of the pushing member (500);
wherein the pushing member (500) is directly and non-contactly driven by another pole of a magnetic field formed by the electromagnetic coil (400) to be moved linearly;
**characterised in that**
the electromagnetic coil (400) comprises an inner surface, the inner surface comprises a spiral groove (401a), the pushing member (500) comprises a protruding member (501a) corresponding to the spiral groove (401a), and when the pushing member (500) is elongated or contracted, the protruding member (501a) slides in the spiral groove (401a) to rotate the pushing member (500) synchronously, so that the pushing member (500) is linearly movable and rotatable to open or close the switch (310).

2. The seat post (100) of claim 1, wherein the cylinder (300) is a pneumatic cylinder, a hydraulic cylinder or a liquid-gas modularized cylinder, and the switch (310) is located on the cylinder (300).

3. The seat post (100) of claim 1, wherein the retractable rod (200) is a pneumatic rod, a hydraulic rod or a liquid-gas modularized rod.

4. The seat post of claim 1, wherein the switch (310) is a valve and the pushing member (500) is moved to open or close the valve.

5. The seat post (100) of claim 1, wherein the switch (310) is a button and the pushing member (500) is moved to push the button.

6. The seat post (100) of claim 1, wherein the retractable rod (200) has a rod axis (X1), and a moving direction of the pushing member (500) is perpendicular to the rod axis (X1).

7. The seat post (100) of claim 1, wherein the switch actuator is immediately adjacent to the retractable rod (200).

8. The seat post (100) of claim 1, wherein the electromagnetic coil (400a) is located in the retractable rod (200).

9. The seat post (100) of claim 1, wherein the electromagnetic coil (400) is located at an end of the retractable rod (200).

10. The seat post (100) of claim 1, further comprising a recovering member (600), wherein the recovering member (600) is located between the electromagnetic coil (400) and the pushing member (500) for providing a recovering force.

11. The seat post (100) of claim 1, wherein the pushing member (500a) comprises at least one protruded limiting lever (502a), an angle limitation mechanism (970) is assembled outside of the limiting lever (502a), the angle limitation mechanism (970) opens at least one curved opening (971), the limiting lever (502a) is position-limitedly swung in the curved opening (971), and a rotation angle ( *θ* ) of the pushing member (500a) is constrained by the corporation between the limiting lever (502a) and the curved opening (971).

## Patentansprüche

1. Elektrisch steuerbare Sattelstütze (100), welche umfasst:
eine einziehbare Stange (200), die einen Schalter (310) und einen Zylinder (300) umfasst, wobei der Schalter (310) so konfiguriert ist, dass er eine Verlängerung und eine Verkürzung des Zylinders (300) auslöst; und
einen Schaltaktor, der mit dem Schalter (310) korrespondiert und umfasst:
ein Schiebeelement (500), welches zum Öffnen oder Schließen des Schalters (310) linear beweglich ist, um eine Verlängerung und eine Verkürzung der einziehbaren Stange (200) über die Verlängerung und Verkürzung des Zylinders (300) anzutreiben; und
eine elektromagnetische Spule (400), die durch Anlegen eines Stroms durch sie hindurch eine Magnetkraft erzeugt; und
eine Steuerung (700), die den Schaltaktor kontrolliert;
wobei das Schiebeelement (500) einen Pol eines Magnetfeldes hat, der an einem Ende des Schiebeelements (500) durch Einspeisung des Stroms durch die elektromagnetische Spule (400) oder durch eine magnetische Eigenschaft an dem Ende des Schiebeelements (500) ausgebildet ist;
wobei das Schiebeelement (500) direkt und berührungslos von einem durch die elektromagnetische Spule (400) ausgebildeten anderen Pol eines Magnetfeldes angetrieben wird, um sich linear zu bewegen;
**dadurch gekennzeichnet, dass**
die elektromagnetische Spule (400) eine Innenfläche umfasst, die Innenfläche eine spiralförmige Rille (401a) aufweist, das Schiebeelement (500) ein mit der spiralförmigen Rille (401a) korrespondierendes vorstehendes Element (501a) umfasst, und wenn das Schiebeelement (500) verlängert oder verkürzt wird, das vorstehende Element (501a) in der spiralförmigen Rille (401a) gleitet, um das Schiebeelement (500) synchron zu drehen, sodass das Schiebeelement (500) linear beweglich und drehbar ist, um den Schalter (310) zu öffnen oder zu schließen.

2. Sattelstütze (100) nach Anspruch 1, bei welcher der Zylinder (300) ein pneumatischer Zylinder, ein hydraulischer Zylinder oder ein modularisierter Flüssiggas-Zylinder ist, und sich der Schalter (310) an dem Zylinder (300) befindet.

3. Sattelstütze (100) nach Anspruch 1, bei welcher die einziehbare Stange (200) eine pneumatische Stange, eine hydraulische Stange oder eine modularisierte Flüssiggas-Stange ist.

4. Sattelstütze nach Anspruch 1, bei welcher der Schalter (310) ein Ventil ist und das Schiebeelement (500) zum Öffnen oder Schließen des Ventils bewegt wird.

5. Sattelstütze (100) nach Anspruch 1, bei welcher der Schalter (310) ein Knopf ist und das Schiebeelement (500) zum Drücken des Knopfs bewegt wird.

6. Sattelstütze (100) nach Anspruch 1, bei welcher die einziehbare Stange (200) eine Stangenachse (X1) hat und eine Bewegungsrichtung des Schiebeelements (500) senkrecht zur Stangenachse (X1) ist.

7. Sattelstütze (100) nach Anspruch 1, bei welcher der Schaltaktor unmittelbar an die einziehbare Stange (200) angrenzt.

8. Sattelstütze (100) nach Anspruch 1, bei welcher die elektromagnetische Spule (400a) in der einziehbaren Stange (200) angeordnet ist.

9. Sattelstütze (100) nach Anspruch 1, bei welcher sich die elektromagnetische Spule (400) an einem Ende der einziehbaren Stange (200) befindet.

10. Sattelstütze (100) nach Anspruch 1, welche ferner ein Rückstellelement (600) umfasst, wobei sich das Rückstellelement (600) zwischen der elektromagnetischen Spule (400) und dem Schiebeelement (500) befindet, um eine Rückstellkraft bereitzustellen.

11. Sattelstütze (100) nach Anspruch 1, bei welcher das Schiebeelement (500a) mindestens einen vorstehenden Begrenzungshebel (502a) umfasst, wobei ein Winkelbegrenzungsmechanismus (970) außerhalb des Begrenzungshebels (502a) montiert ist, wobei der Winkelbegrenzungsmechanismus (970) an mindestens einer gekrümmten Öffnung (971) geöffnet ist, wobei der Begrenzungshebel (502a) positionsbegrenzt in der gekrümmten Öffnung (971) geschwenkt wird, und ein Drehwinkel (θ) des Schiebeelements (500a) durch das Zusammenspiel zwischen dem Begrenzungshebel (502a) und der gekrümmten Öffnung (971) begrenzt wird.

## Revendications

1. Montant de selle réglable électriquement (100), comprenant :
une tige rétractable (200) comprenant un commutateur (310) et un cylindre (300), dans lequel le commutateur (310) est configuré pour déclencher un allongement et une contraction du cylindre (300) ; et
un actionneur de commutateur correspondant au commutateur (310) et comprenant :
un élément poussoir (500) qui est linéairement mobile pour ouvrir et fermer le commutateur (310) de manière à entraîner un allongement et une contraction de la tige rétractable (200) par le biais d'un allongement et d'une contraction du cylindre (300) ; et
une bobine électromagnétique (400) générant une force magnétique en y injectant un courant ; et
un dispositif de commande (700) commandant l'actionneur de commutateur ;
dans lequel l'élément poussoir (500) présente un pôle d'un champ magnétique formé à une extrémité de l'élément poussoir (500) en injectant le courant à travers la bobine électromagnétique (400) ou par une propriété magnétique à l'extrémité de l'élément poussoir (500) ;
dans lequel l'élément poussoir (500) est entraîné directement et sans contact par un autre pôle d'un champ magnétique formé par la bobine électromagnétique (400) pour être déplacé linéairement ;
**caractérisé en ce que**
la bobine électromagnétique (400) comprend une surface intérieure, la surface intérieure comprend une rainure en spirale (401a), l'élément poussoir (500) comprend un élément saillant (501a) correspondant à la rainure en spirale (401a), et lorsque l'élément poussoir (500) est allongé ou contracté, l'élément saillant (501a) glisse dans la rainure en spirale (401a) pour faire pivoter l'élément poussoir (500) de manière synchrone, de sorte que l'élément poussoir (500) soit mobile linéairement et rotatif pour ouvrir et fermer le commutateur (310).

2. Montant de selle (100) selon la revendication 1, dans lequel le cylindre (300) est un cylindre pneumatique, un cylindre hydraulique ou un cylindre modulaire liquide-gaz, et le commutateur (310) est situé sur le cylindre (300).

3. Montant de selle (100) selon la revendication 1, dans lequel la tige rétractable (200) est une tige pneumatique, une tige hydraulique ou une tige modulaire liquide-gaz.

4. Montant de selle selon la revendication 1, dans lequel le commutateur (310) est une soupape et l'élément poussoir (500) est déplacé pour ouvrir et fermer la soupape.

5. Montant de selle (100) selon la revendication 1, dans lequel le commutateur (310) est un bouton et l'élément poussoir (500) est déplacé pour appuyer sur le bouton

6. Montant de selle (100) selon la revendication 1, dans lequel la tige rétractable (200) présente un axe de tige (X1), et une direction de déplacement de l'élément poussoir (500) est perpendiculaire à l'axe de tige (X1).

7. Montant de selle (100) selon la revendication 1, dans lequel l'actionneur de commutateur est immédiatement adjacent à la tige rétractable (200).

8. Montant de selle (100) selon la revendication 1, dans lequel la bobine électromagnétique (400a) est située dans la tige rétractable (200).

9. Montant de selle (100) selon la revendication 1, dans lequel la bobine électromagnétique (400) est située à une extrémité de la tige rétractable (200).

10. Montant de selle (100) selon la revendication 1, comprenant en outre un élément de récupération (600), dans lequel l'élément de récupération (600) est situé entre la bobine électromagnétique (400) et l'élément poussoir (500) pour fournir une force de récupération.

11. Montant de selle (100) selon la revendication 1, dans lequel l'élément poussoir (500a) comprend au moins un levier de limitation saillant (502a), un mécanisme de limitation d'angle (970) est assemblé à l'extérieur du levier de limitation (502a), le mécanisme de limitation d'angle (970) ouvre au moins une ouverture incurvée (971), le levier de limitation (502a) est basculé de manière limitée par rapport à la position dans l'ouverture incurvée (971), et un angle de rotation (θ) de l'élément poussoir (500a) est restreint par l'incorporation entre le levier de limitation (502a) et l'ouverture incurvée (971).
